# EUROPEAN PATENT SPECIFICATION

(11) **EP 3 092 926 B1**
(45) Date of publication and mention of the grant of the patent: **21.02.2018**
(21) Application number: 15001414.0
(22) Date of filing: 12.05.2015
(51) Int. Cl.: A47K 13/16, A47K 17/00

(54) **TOUCH-FREE TOILET-SEAT PAPER DISPENSING DEVICE**
BERÜHRUNGSLOSE TOILETTENSITZPAPIERSPENDEVORRICHTUNG
DISTRIBUTEUR DE PAPIER SANS TOUCHER SUR SIÈGE DE TOILETTE

(43) Date of publication of application: 16.11.2016
(73) Proprietor: Tranzonic Companies, Cleverland OH (US)
(72) Inventor: Bagdi, Sándor, H-4028 Debrecen (HU); Rist, Atilla, 86167 Augsburg (DE)
(74) Representative: Lawrie, Donald James

(56) References cited:
- EP-A1- 2 522 265
- US-A- 333 073
- US-A- 552 523
- US-A- 1 224 646

## Description

The invention relates to a reliable touch-free toilet-seat paper dispensing device, primarily for public toilets.

Keeping toilets, especially public toilets clean in order to prevent infections is an important task. In addition to the regular disinfection of public toilets, for hygienic reasons it is advisable to use toilet-seat paper on the toilet seat. The demand for the use of toilet-seat paper in public toilets is increasing, but for health reasons it is important to ensure that the toilet-seat paper to be used is touched only by the person who will use it. Therefore the way of dispensing the toilet-seat paper is an important task.
The solutions known for dispensing toilet-seat paper include a device operated by a spring mechanism, which discharges a paper towel or toilet-seat paper when the handle is pulled down. In the case of such solutions the paper towels or toilet-seat papers to be dispensed are in stacks or rolls.
The disadvantage of this solution is that on the one hand the person using the toilet has to touch the operating handle that has been touched by the persons using the toilet before him/her, that is this solution fails to meet the hygiene requirements. On the other hand, the device often malfunctions in such a way that one side of the paper gets stuck and is torn when extracted, then the user pulls down the handle again, using more paper than he/she really needs.

US Patent No. 4,856,694 relates to a paper shifting apparatus for toilet seats. The essence of the invention is that a supply case containing toilet-seat covering paper is installed on one side of a toilet bowl, the paper is threaded through a pair of supply rollers and laid on the toilet seat.
The used toilet-seat paper is moved to a take-up case installed on the other side of the toilet bowl by means of a pair of take-up rollers. These rollers are mechanically coupled with a motor driving the rollers and equipped with a power switch. When the power switch is pushed, the motor starts and rotates the rollers.

The disadvantage of this solution is that too much paper is used, and also hygiene is not fully provided, as the user has to touch a push button.

US Patent No. 4,106,135 relates to a water closet basin assembly dispensing paper suitable for covering the seat of the basin, which is placed proximate to the basin and dispenses paper from a roll mounted on a spool, discharging it through an opening and cutting it to proper size by means of a spring-operated cutter device. The spring-operated cutter device is mechanically connected to a sprocket wheel causing the rotation of the spool of the paper roll.
This solution is economical from the point of view of paper use, but the construction of the assembly is quite complicated.
Patent application No. EP2522265 relates to a touch-free toilet-seat paper dispensing device corresponding to the preamble of claim 1. The main parts of this dispensing device are a case, a mounting plate fixed to the wall of the case, and an electronic unit, a motor, a paper supply roller mounted uniaxially with the motor, as well as a microswitch and a microswitch activating cam located on the mounting plate.
The case is equipped with an openable door and an opening on its lower part. A sensor is installed in the door of the case, and folded toilet-seat papers are fixed in the case on the side opposite to the door.
In the case the specially shaped mounting plate equipped with supporting tabs is connected to the door with a shaft, resting on the door by means of the supporting tabs. The shape of the paper supply roller is a truncated cylinder cut by a plane parallel to the generators, and the curved surface thereof is rubber coated.
In idle state the non-rubber coated part of the paper supply roller is parallel to the toilet-seat papers and is not in contact with them. In active state, when the paper supply roller makes a 360° rotation, during the rotation the rubber coated part presses against the toilet-seat papers, takes a toilet-seat paper and discharges it through the opening of the case.
The disadvantage of this solution is that when the device discharges the toilet-seat paper, the mounting plate gets too close to the stack of toilet-seat papers, thus interfering with the pulling out of the discharged paper, and the toilet-seat paper can easily get torn, especially in the case of a full stack of papers.

The aim of the invention is to further develop the above invention, the touch-free toilet-seat paper dispensing device, to ensure that the toilet-seat paper dispensing device reliably discharges the toilet-seat paper in all cases, even in the case of a full stack of papers, thereby making more efficient the operation of the toilet-seat paper dispensing device.
A further aim of this invention is to include reliability functions for the efficient operation of the device. Such functions allow the device to discharge the toilet-seat paper when the accumulator or battery power is getting low, to indicate when the accumulator or battery power is low, or when toilet-seat paper of insufficient quality is placed into the dispensing device.

The idea of the invention comes from the recognition that if in the toilet-seat paper dispensing device the distance between the mounting plate and the stack of papers is increased and this increased distance can be maintained, then the toilet-seat paper can be pulled out in all cases without any interference.

The aim can be achieved by installing a retracting roller and a supporting plate in the toilet-seat paper dispensing device, and by improving the operational functions of the device through the development, programming of the electronic unit.

The invention relates to a reliable touch-free toilet-seat paper dispensing device, the main parts of which are a case containing toilet-seat papers, a mounting plate fixed to the wall of the case, and an electronic box, a motor, a paper supply roller mounted uniaxially with the motor, as well as a microswitch and a microswitch activating cam located on the mounting plate.
The case is mounted on the wall of the toilet by its rear wall, the upper part, front wall and lower part of the case form an openable door, with an opening on the lower part. A sensor is installed in the door of the case, and the folded toilet-seat papers are fixed on the inner side of the rear wall of the case.
In the case the specially shaped mounting plate equipped with supporting tabs is connected to the door with a shaft. The supporting tabs are preferably continuously joined to the mounting plate, and are perpendicular to it. The supporting tabs keep the mounting plate sufficiently away from the door, and the mounting plate can flexibly bend at the supporting points.
The shape of the paper supply roller is a truncated cylinder cut by a plane parallel to the generators, and the curved surface thereof is rubber coated.
The retracting roller is mounted on the same shaft as the motor and the paper supply roller. The retracting roller is smaller than the paper supply roller.
The retracting roller is surrounded by a supporting plate, the supporting plate is a multiply bent plate, one side of which is fixed firmly to the door of the case.
The relative position of the paper supply roller and the retracting roller to each other is such that the rubber coated part of the paper supply roller and the radiused part of the retracting roller face in the opposite directions, and move in the same direction.

When the device is in idle state, that is not in operation, the non-rubber coated part of the paper supply roller is parallel to the toilet-seat papers and is not in contact with them. Then the radiused part of the retracting roller is in tangential contact with that side of the supporting plate closest to the toilet-seat papers, parallel to them. In active state, when the device discharges a toilet-seat paper, the paper supply roller makes a 360° rotation, the rubber coated part presses against the toilet-seat papers, takes a toilet-seat paper and discharges it through the opening of the case.
When the paper supply roller makes a rotation, the retracting roller also makes a rotation, thus the tangential contact between the radiused part of the retracting roller and the supporting plate is terminated.

The reliability functions can be implemented through the development of the electronic unit.
The most important part of the electronic unit is a programmable controller chip.
It is important from the point of view of the invention that the device should operate properly even when the accumulator or battery power is getting low. Therefore the controller chip is programmed to operate the motor for a given period of time, e.g. 3 sec. upon receiving the signal detected by the sensor. When the accumulator or battery is sufficiently charged, it takes 1 sec. for the paper supply roller to make a rotation, that is to discharge a toilet-seat paper.

When the accumulator or battery power is getting low, or too many toilet-seat papers are placed into the device, it takes a longer period of time for the paper supply roller to make a rotation. This is ensured by programming a longer period of operation. Furthermore the electronic unit detects the accumulator or battery charge level, and indicates when it is getting critical by lighting a LED and/or giving an audio signal. The LED light is preferably installed on the upper part of the case, while the loudspeaker is preferably installed inside the case.

As the flawless operation of the device according to the invention is ensured only with a specific type of toilet-seat paper, the programming of the controller chip allows it to recognize the stack of papers placed into the device. A suitable solution is to include a transmitter in the stack of papers and a receiver in the electronic unit, and if the electronic unit cannot find the signal when a new stack of papers is placed into the device, it switches into stand-by mode of operation.

In another preferred embodiment, a coin recognition system can be connected to the device according to the invention. The coin recognition system is operated through the appropriate programming of the controller chip, and the sensor is activated only after the correct coin is inserted.

In a further preferred embodiment, the electronic unit can also be equipped with a function to store and play back promotional and awareness raising audio materials. The audio material can be uploaded to the electronic unit from a memory card or a computer.

The reliable touch-free toilet-seat paper dispensing device according to the invention is now described in more detail with reference to the following drawings, where
Figure 1 shows a front view of the mounting plate of the device according to the invention;
Figure 2 shows a side view of the device according to the invention in idle state;
Figure 3 shows a side view of the device according to the invention in active state;
Figure 4 shows a front view of the toilet-seat paper placed into the device according to the invention, and the way of fixing it.

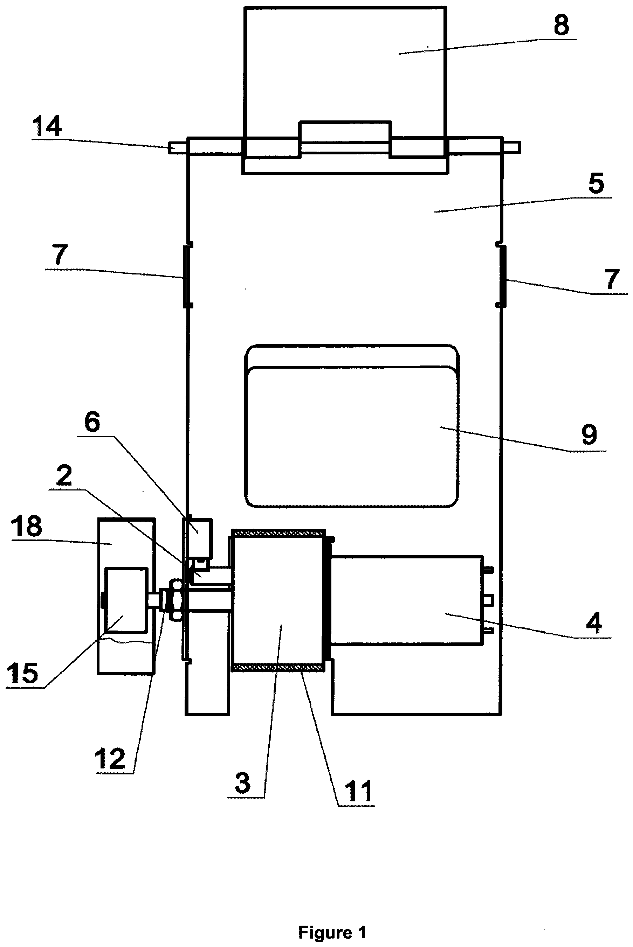

Figure 1 shows the rectangularly shaped mounting plate 5, connected to a fixing plate 8 with a fixing shaft 14. There are two supporting tabs 7 on the mounting plate 5 near the fixing shaft 14.
An electronic box 9 is mounted on the mounting plate 5. A motor 4 and a paper supply roller 3 are connected to a shaft 12.
The paper supply roller 3 has a special shape, it has a curved surface that is rubber coated 11, while the non-curved part is not coated with rubber. An aperture is formed in the mounting plate 5 for the paper supply roller 3. The aperture allows the paper supply roller 3 to extend beyond the plane of the mounting plate 5 during its movement.
The side edges of the mounting plate 5 and the edges of the aperture are bent (forming tabs) perpendicularly to the mounting plate 5. The common shaft 12 of the paper supply roller 3 and the motor 4 is fixed to these perpendicularly bent parts of the mounting plate 5.
A microswitch 6 is fixed on the mounting plate 5, at the side towards the paper supply roller 3, in a releasable manner. A microswitch activating cam 2 coming into contact with the microswitch 6 is installed on the paper supply roller 3.
A retracting roller 15 is mounted on the extended shaft 12 of the paper supply roller 3 with a set screw. The retracting roller 15 is surrounded by a supporting plate 18.

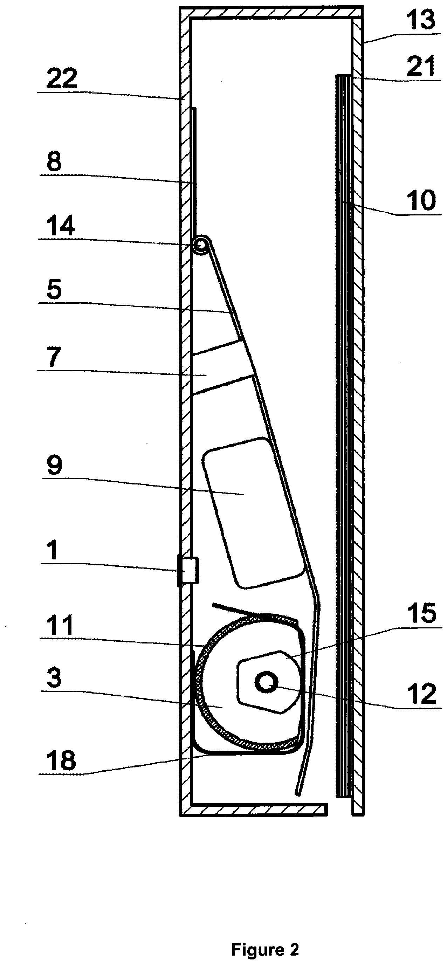

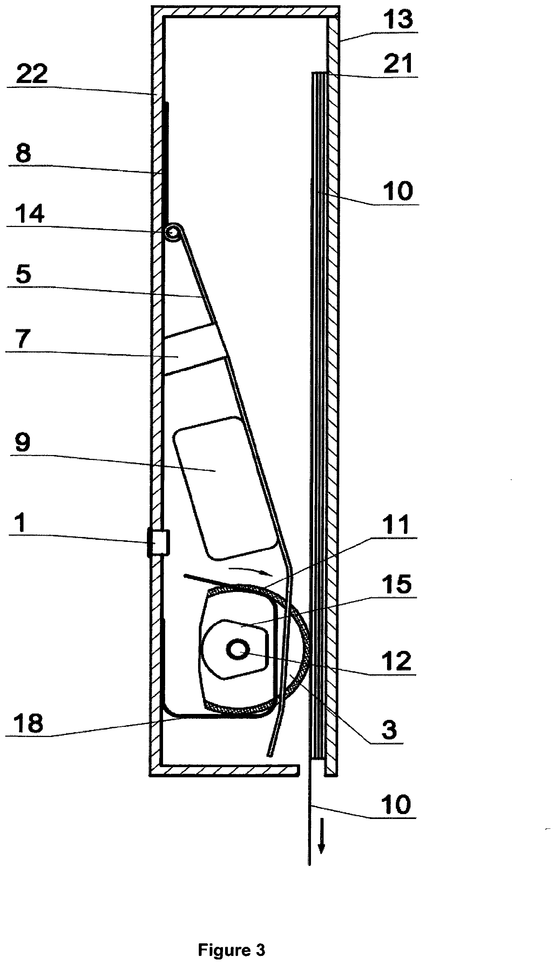

Figures 2 and 3 show the units included in the case 13.
The case 13 comprises a rear wall 21 and a door 22. The door 22 is formed by the upper part, front part and lower part of the case 13. The case 13 is mounted firmly in a given location by its rear wall 21. The toilet-seat papers 10 are fixed on the inner side of the rear wall 21 in a vertical position. The toilet-seat papers 10 are stacked on top of each other and are specially folded.
A fixing plate 8 is connected firmly to the inner side of the door 22, and the mounting plate 5 is connected to the fixing plate 8 with a fixing shaft 14. There are supporting tabs 7 on the mounting plate 5, and an electronic box 9.
The mounting plate 5 rests on the door 22 by means of the supporting tabs 7 in such a manner that the larger part of the mounting plate 5 is unsupported. Figures 2 and 3 illustrate well the shape of the mounting plate 5 with two slight bends, and its position in the case 13.
The door 22 is equipped with a sensor 1.
The paper supply roller 3 has a special shape, it is not a regular cylinder, ca. 30 % of it is cut off by a plane parallel to the generators of the cylinder. The curved surface of the paper supply roller 3 is rubber coated 11, while the non-curved part is not coated with rubber.
The retracting roller 15 is mounted on the shaft 12 before the paper supply roller 3. The retracting roller 15 has an isosceles trapezoid shaped cross-section, the longer base of which has a curved, radiused part.
The relative position of the paper supply roller 3 and the retracting roller 15 to each other is such that the curved part of the paper supply roller 3 and the radiused part of the retracting roller 15 always face in the opposite directions.
The retracting roller 15 is surrounded by a supporting plate 18.
The supporting plate 18 is a bent plate with four sides and an open edge. One of its sides is fixed firmly on the door 22, the side opposite to it is parallel to the rear wall 21.

Figure 2 shows the device according to the invention in idle state (rest state). Then the non-rubber coated part of the paper supply roller 3 is closer to the toilet-seat papers 10, it is parallel to them, but not in contact with them. In idle state the curved, radiused part of the retracting roller 15 is in tangential contact with the side of the supporting plate 18 parallel to the rear wall 21.

Figure 3 shows the device according to the invention in operation.
In active state the paper supply roller 3 makes a full rotation. Then the rubber coated 11 part of the paper supply roller 3, extending beyond the plane of the mounting plate 5 through the aperture, presses against the toilet-seat papers 10. As the paper supply roller 3 rotates, it takes a toilet-seat paper 10. Upon making a full rotation, the non-rubber coated part of the paper supply roller 3 faces the toilet-seat papers 10 again, that is it returns to idle state. As the paper supply roller 3 moves, the radiused part of the retracting roller 15 moves away from the supporting plate 18, not to interfere with the operation of the paper supply roller 3.

The free movement of the paper supply roller 3 is ensured by the mounting plate 5, which acts as a plate spring in such a manner that at the points supported by the supporting tabs 7 the free end of the mounting plate 5 can flexibly bend.
And the retracting roller 15 surrounded by the supporting plate 18 ensures that the mounting plate 5 is at a sufficient distance from the toilet-seat paper 10, and does not interfere with the movement of the toilet-seat paper 10.

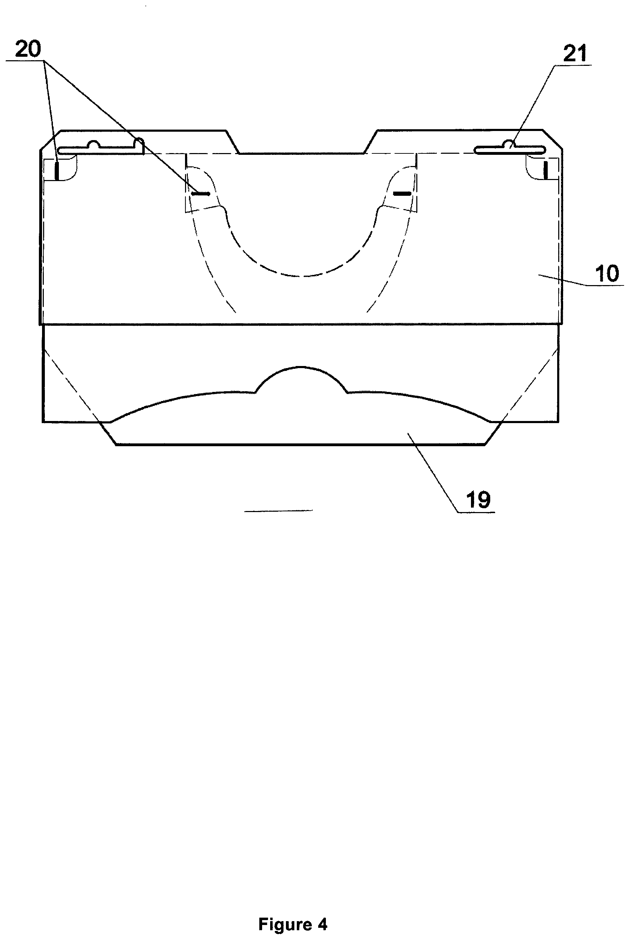

Figure 4 shows the stack of papers containing the toilet-seat papers 10.
In the stack of papers the toilet-seat papers 10 are folded in half, placed side by side and stapled on a cardboard 19 at stapling points 20.
At the stapling points 20 the toilet-seat papers 10 are perforated. The perforations on the toilet-seat papers 10 are designed to ensure the best possible way of tearing off the toilet-seat papers 10.
The toilet-seat papers 10 are preferably made of 20 g/m² white paper of a unique composition. The surface of one side is glossy, the other side is matte and rough. A stack of papers contains 125 pieces of shape punched units.
Upon coming into contact with water, the toilet-seat paper 10 absorbs moisture and disintegrates, thereby the risk of clogging is completely excluded.

In the solution according to the invention, the material of the paper supply roller 3 and the retracting roller 15 is preferably plastic. Preferably 60-70 % of the surface of the paper supply roller 3 is rubber coated 11.
The material of the case 13, the mounting plate 5 and the supporting plate 18 is metal or plastic.

The electrical connection of the device according to the invention is typically that the sensor 1 is in electrical connection with the electronic unit located in the electronic box 9. The electronic unit is a printed circuit board with surface-mounted components, the most important of which is a programmable controller chip. The electricity required for the operation of the device is provided by a power source/supply unit located in the case 13 near the mounting plate 5. The power source is preferably a battery, accumulator.

The device according to the invention can be equipped with various additional functions through the programming of the controller chip.
The appropriate programming of the controller chip allows:
- the adjustment of the period of time for which the motor 4 is operated to discharge one piece of toilet-seat paper 10;
- the indication of a low accumulator or battery charge level by giving a light and/or audio signal;
- the recognition of the appropriate toilet-seat paper 10;
- the connection of a coin recognition system;
- the storage and playback of promotional and awareness raising audio materials.

In the case 13 of the device according to the invention the toilet-seat papers 10 are stacked on top of each other and stapled together.
In the idle state of the device according to the invention the non-rubber coated part of the paper supply roller 3 faces the toilet-seat papers 10 in such a manner that there is no point of contact between the paper supply roller 3 and the toilet-seat papers 10. In idle state the radiused part of the retracting roller 15 presses against the supporting plate 18. If the user moves his/her hand in front of the sensor 1, the sensor 1 activates the electronic unit, which starts the motor 4, as a result of which the paper supply roller 3 starts to rotate, thus the rubber coated 11 part of the paper supply roller 3 comes into contact with the outermost toilet-seat paper 10 of the stack of papers. The paper supply roller 3, as a result of its rotating-pressing motion, takes the one toilet-seat paper 10 with which the rubber coated 11 part of the paper supply roller 3 comes into contact, and tears it off along the perforated tabs. The microswitch activating cam 2 ensures that the motor 4 stops after the paper supply roller 3 makes a full rotation. As the paper supply roller 3 makes a 360° rotation, its rubber coated 11 part takes the one piece of toilet-seat paper 10 coming into contact with it, then the non-rubber coated part of the paper supply roller 3 faces the toilet-seat papers 10 again. The toilet-seat paper 10 is discharged by the paper supply roller 3 through the opening of the case 13 to such an extent that it can be easily extracted by the user.
The rubber coated 11 part of the paper supply roller 3 adheres to the rough surface of the toilet-seat paper 10, and its rotation tears it off. The other, glossy surface of the toilet-seat paper 10 easily slips off the rough surface of the toilet-seat paper 10 behind it, thus ensuring its discharge without any interference. The cardboard 19 on the one hand holds together the stack of papers, and on the other hand allows the fixing of the stack of papers on the rear wall 21 of the case 13. The toilet-seat papers 10 are stapled together in such a manner that in case of a smaller force they can move loosely, one at a time, but against their own weight and during loading - storage they remain firmly fixed to the cardboard 19. The perforations at the stapling points 20 are designed to ensure that the paper supply roller 3 can easily tear off the toilet-seat papers 10, without tearing them anywhere else.
In the folded state the toilet-seat papers 10 in the stack of papers form such a shape that the paper supply roller 3 can take hold of the first toilet-seat paper 10 without any interference. In the unfolded state this toilet-seat paper 10 is the innermost. When the paper supply roller 3 is active, it always takes the innermost toilet-seat paper 10 from the stack of papers, thereby ensuring that the cardboard 19 holds together the toilet-seat papers 10 remaining in the stack of papers until the last piece.
The device according to the invention is mounted on the wall of the toilet in such a manner that the sensor 1 senses only deliberate actions.

The solution according to the invention ensures the reliable operation of the device irrespective of the quantity of toilet-seat papers 10.
This invention relates primarily to the dispensing of toilet-seat papers, but this solution can be used for dispensing paper towels and toilet paper as well.

## Claims

1. A touch-free toilet-seat paper dispensing device comprising a case (13) equipped with a power source, with toilet-seat papers (10) fixed in the case (13), a flexibly bendable mounting plate (5) fixed to the door (22) of the case (13), with an electronic box (9) containing an electronic unit and a shaft (12) mounted on the mounting plate (5), and a motor (4) and a paper supply roller (3) connected to the shaft (12); the paper supply roller (3) is equipped with a microswitch activating cam (2), activating a microswitch (6) fixed on the mounting plate (5); the paper supply roller (3) is a truncated cylinder cut by a plane parallel to the generators, and the curved surface thereof is rubber coated (11), **characterised in that** the main part of the electronic unit is a programmable controller chip, and a retracting roller (15) having a radiused part is mounted on the shaft (12) before the paper supply roller (3), and the retracting roller (15) is surrounded by a supporting plate (18).

2. The device according to claim 1, wherein the curved part of the paper supply roller (3) and the radiused part of the retracting roller (15) face in the opposite directions.

3. The device according to claim 1, wherein in idle state the radiused part of the retracting roller (15) is in tangential contact with the supporting plate (18).

4. The device according to claims 1-3, wherein the supporting plate (18) is a bent plate with at least four sides and an open edge.

5. The device according to claims 1-4, wherein one side of the supporting plate (18) is fixed on the door (22).

6. The device according to claim 1, wherein 60-70 % of the surface of the paper supply roller (3) is rubber coated (11).

7. The device according to claim 1, wherein the period of time for which the motor (4) is operated to discharge one piece of toilet-seat paper (10) can be adjusted through the programming of the controller chip.

8. The device according to claim 1, wherein the electronic unit gives a light and/or audio signal when the accumulator or battery charge level is low.

9. The device according to claim 1, wherein the electronic unit is suitable for the storage and playback of promotional and awareness raising audio materials.

10. The device according to claim 1, wherein a coin recognition system can be connected to the device.

11. The device according to claim 1, wherein the electronic unit includes a receiver, while the stack of papers containing the toilet-seat papers (10) includes a transmitter.

## Patentansprüche

1. Berührungsfreie Toilettensitzpapierabgabevorrichtung, umfassend ein Gehäuse (13), das mit einer Stromquelle ausgestattet ist, wobei Toilettensitzpapiere (10) in dem Gehäuse (13) befestigt sind, eine flexibel biegbare Montageplatte (5), die an der Tür (22) des Gehäuses (13) befestigt ist, wobei eine elektronische Box (9), die eine elektronische Einheit und eine Welle (12) enthält, auf der Montageplatte (5) montiert ist, und einen Motor (4) und eine Papierzuführrolle (3), die mit der Welle (12) verbunden ist; wobei die Papierzuführrolle (3) mit einem Mikroschalteraktivierungsnocken (2) ausgestattet ist, der einen Mikroschalter (6) aktiviert, der an der Montageplatte (5) befestigt ist; wobei die Papierzuführrolle (3) ein abgeschnittener Zylinder ist, der durch eine Ebene parallel zu den Generatoren geschnitten ist, und die gekrümmte Oberfläche davon gummibeschichtet (11) ist, **dadurch gekennzeichnet, dass** der Hauptteil der elektronischen Einheit ein programmierbarer Steuerchip ist und eine Rückzugsrolle (15), die einen gerundeten Teil aufweist, vor der Papierzuführrolle (3) auf der Welle (12) montiert wird, und wobei die Rückzugsrolle (15) von einer Stützplatte (18) umgeben ist.

2. Vorrichtung nach Anspruch 1, wobei der kurvenförmige Teil der Papierzuführrolle (3) und der gerundete Teil der Rückzugsrolle (15) in die entgegengesetzten Richtungen weisen.

3. Vorrichtung nach Anspruch 1, wobei der gerundete Teil der Rückzugsrolle (15) im Ruhezustand in tangentialem Kontakt mit der Stützplatte (18) steht.

4. Vorrichtung nach einem der Ansprüche 1-3, wobei die Stützplatte (18) eine gekrümmte Platte mit mindestens vier Seiten und einem offenen Rand ist.

5. Vorrichtung nach einem der Ansprüche 1-4, wobei eine Seite der Stützplatte (18) an der Tür (22) befestigt ist.

6. Vorrichtung nach Anspruch 1, wobei 60-70 % der Oberfläche der Papierzuführrolle (3) gummibeschichtet (11) ist.

7. Vorrichtung nach Anspruch 1, wobei die Zeitdauer, während der der Motor (4) zum Freigeben eines Stücks Toilettensitzpapiers (10) betrieben wird, durch das Programmieren des Steuerchips eingestellt werden kann.

8. Vorrichtung nach Anspruch 1, wobei die elektronische Einheit ein Licht- und/oder Tonsignal abgibt, wenn der Akkumulator- oder Batterieladungspegel niedrig ist.

9. Vorrichtung nach Anspruch 1, wobei die elektronische Einheit zum Speichern und Wiedergeben von Werbe- und Bewusstseinsbildungs-Audiomaterial geeignet ist.

10. Vorrichtung nach Anspruch 1, wobei ein Münzerkennungssystem mit der Vorrichtung verbunden werden kann.

11. Vorrichtung nach Anspruch 1, wobei die elektronische Einheit einen Empfänger einschließt, während der die Toilettensitzpapiere (10) enthaltende Papierstapel einen Sender einschließt.

## Revendications

1. Un dispositif de distribution de papier pour siège de toilettes sans contact comprenant un coffret (13) équipé d'une source d'alimentation, des papiers pour siège de toilettes (10) étant fixés dans le coffret (13), une plaque de montage pliable de manière souple (5) fixée à la porte (22) du coffret (13), un boîtier électronique (9) contenant une unité électronique et un arbre (12) étant montés sur la plaque de montage (5), et un moteur (4) et un rouleau d'alimentation en papier (3) raccordé à l'arbre (12) ; le rouleau d'alimentation en papier (3) est équipé d'une came d'activation de microrupteur (2), activant un microrupteur (6) fixé sur la plaque de montage (5) ; le rouleau d'alimentation en papier (3) est un cylindre tronqué coupé par un plan parallèle aux générateurs, et la surface incurvée de celui-ci est revêtue de caoutchouc (11), **caractérisé en ce que**
la partie principale de l'unité électronique est une puce de dispositif de commande programmable, et un rouleau rétractable (15) ayant une partie arrondie est monté sur l'arbre (12) avant le rouleau d'alimentation en papier (3), et le rouleau rétractable (15) est entouré par une plaque de support (18).

2. Le dispositif selon la revendication 1, dans lequel la partie incurvée du rouleau d'alimentation en papier (3) et la partie arrondie du rouleau rétractable (15) sont orientées dans les directions opposées.

3. Le dispositif selon la revendication 1, dans lequel à l'état de repos la partie arrondie du rouleau rétractable (15) est en contact tangentiel avec la plaque de support (18).

4. Le dispositif selon les revendications 1 à 3, dans lequel la plaque de support (18) est une plaque pliée avec au moins quatre côtés et un bord ouvert.

5. Le dispositif selon les revendications 1 à 4, dans lequel un côté de la plaque de support (18) est fixé sur la porte (22).

6. Le dispositif selon la revendication 1, dans lequel de 60 à 70 % de la surface du rouleau d'alimentation en papier (3) sont revêtus de caoutchouc (11).

7. Le dispositif selon la revendication 1, dans lequel la période de temps pendant laquelle le moteur (4) est actionné pour libérer un morceau de papier pour siège de toilettes (10) peut être ajustée par le biais de la programmation de la puce de dispositif de commande.

8. Le dispositif selon la revendication 1, dans lequel l'unité électronique produit un signal lumineux et/ou audio lorsque le niveau de charge de l'accumulateur ou de la batterie est bas.

9. Le dispositif selon la revendication 1, dans lequel l'unité électronique est appropriée pour le stockage et la lecture de documents audio promotionnels et de sensibilisation.

10. Le dispositif selon la revendication 1, dans lequel un système de reconnaissance de pièces de monnaie peut être raccordé au dispositif.

11. Le dispositif selon la revendication 1, dans lequel l'unité électronique inclut un récepteur, tandis que la pile de papiers contenant les papiers pour siège de toilettes (10) inclut un émetteur.
